# EUROPÄISCHE PATENTSCHRIFT

(11) **EP 1 349 439 B1**
(45) Veröffentlichungstag und Bekanntmachung des Hinweises auf die Patenterteilung: **09.11.2005**
(21) Anmeldenummer: 02007113.0
(22) Anmeldetag: 28.03.2002
(51) Int. Cl.: H05H 1/34, B23K 10/00, C03B 23/00

(54) **Verfahren und Vorrichtung zum Schliessen von Glasampullen**
Method and device for glass ampule sealing
Procédé et dispositif de fermeture d'ampoules en vitre

(43) Veröffentlichungstag der Anmeldung: 01.10.2003
(73) Patentinhaber: Plasma Treat GmbH, 33803 Steinhagen (DE)
(72) Erfinder: Schüssler, Joachim, 75217 Birkenfeld (DE); Förnsel, Peter, 32139 Spenge (DE); Buske, Christian, 33803 Steinhagen (DE); Bader, Willi, 74542 Braunsbach (DE)
(74) Vertreter: Cohausz & Florack

(56) Entgegenhaltungen:
- EP-A- 0 761 415
- WO-A-01/43512
- DE-A- 1 471 961
- DE-U- 29 824 611
- GB-A- 1 335 080
- US-A- 3 523 017
- DATABASE WPI Section Ch, Week 199327 Derwent Publications Ltd., London, GB; Class L01, AN 1993-218460 XP002211669 & SU 1 747 403 A (PONOMAREV E V), 15. Juli 1992 (1992-07-15)

## Beschreibung

Die Erfindung betrifft ein Verfahren zum Öffnen oder Schließen von Glasampullen durch Schmelzen des Glases mit Hilfe eines Strahls eines heißen Mediums sowie eine Vorrichtung zur Durchführung des Verfahrens.

Flüssigkeiten, die zuverlässig gegen Kontamination geschützt werden müssen, insbesondere Seren für medizinische Injektionen, werden häufig in Glasampullen abgefüllt, die dann durch Zuschmelzen luftdicht verschlossen werden. Hierzu werden bisher Gasbrenner eingesetzt, deren Flamme auf die zu schmelzenden Teile der Ampulle gerichtet wird.

Wenn die Ampullen im geschlossenen Zustand angeliefert werden, müssen sie vor dem Befüllen zunächst geöffnet werden, indem eine Kappe der Ampulle abgetrennt wird. Auch hierzu wird bevorzugt ein Gasbrenner eingesetzt, damit die Sterilität der Ampulle gewährleistet bleibt.

Der Betrieb der Gasbrenner erfordert jedoch einen hohen Aufwand und hohe Betriebskosten, da verhältnismäßig teure brennbare Gase benötigt werden. Die Gase müssen sicher bevorratet werden, und die Gaszufuhrsysteme zu den Brennern müssen sorgfältig gegen Leckagen geschützt sein, damit keine Explosionsgefahr entsteht.

Häufig muss das Öffnen, Befüllen und Verschließen der Ampullen in Reinräumen durchgeführt werden, um eine Kontamination der Flüssigkeiten und der Ampullen zu vermeiden. Der Verbrennungsprozess im Gasbrenner muss deshalb sorgfältig so gesteuert werden, dass keine Rußbildung auftritt. Auch die bei der Verbrennung entstehenden Abgase können sich als schädlich erweisen.

Die DE 298 24 611 U offenbart eine Ampullenfüll- und Verschließeinrichtung, bei der die Ampullen mittels Laserstrahlung zugeschmolzen werden. Als "heißes Medium" ist hierbei der Laserstrahl anzusehen, dessen Strahlungsenergie auf das Glas übertragen wird.

Die GB 1 335 080 offenbart die Anwendung von Plasmabrennern zum Verschließen von Quarzlampen, bei denen zwischen zwei gegenüberliegend angeordneten Plasmabrennern ein sekundärer Lichtbogen gezündet wird, der wiederum zum Aufschmelzen des Quarzglases verwendet wird.

Die DE 1 471 961 offenbart einen Plasmabrenner, bei dem aus einer Düse ein Plasmastrahl aus einem hocherhitzten, teilweise ionisierten und angeregten Gas austritt. Mit Hilfe eines Magnetfeldes wird der Plasmastrahl aufgefächert und anschließend auf eine Quarzglaslampe gerichtet, um dort einen Schmelzvorgang zu erzeugen. Das Plasma wird dabei mit einer hocherhitzten kontinuierlichen Gasentladung bei niedrigem Druck erzeugt, das dann in die Atmosphäre ausgelassen wird. Dieses entspricht den herkömmlichen Plasmabrennern, die zum Schweißen oder Aufschmelzen von Materialien eingesetzt werden.

Die Druckschrift US 3,523,017 beschreibt den Einsatz eines Gasbrenners zum Verschließen von Glasampullen.

Aufgabe der Erfindung ist es deshalb, ein Verfahren und eine Vorrichtung anzugeben, mit denen sich die - Glasampullen einfach und kostengünstig und ohne Kontaminationsgefahr öffnen und/oder schließen lassen.

Diese Aufgabe wird erfindungsgemäß durch ein Verfahren nach Anspruch 1 und eine Vorrichtung nach Anspruch 5 gelöst. Hierbei ist das Medium ein durch elektrische Entladung erzeugtes atmosphärisches Plasma.

Da das Plasma einfach und energieeffizient durch elektrische Entladung unter Verwendung von Luft als Arbeitsgas erzeugt werden kann, verringern sich die Betriebs- und Anlagekosten. Insbesondere entfällt die Vorratshaltung für gasförmige Brennstoffe, und es wird kein aufwendiges und lecksicheres Gaszuführsystem benötigt. Die hohe Energieeffizienz wird nicht zuletzt dadurch erreicht, dass die angeregten Radikale und Ionen im Plasma zu einem besonders wirksamen Wärmeübergang von der Plasmaflamme auf das zu schmelzende Gas führen. Die angeregten Radikale und Ionen haben darüber hinaus eine sterilisierende Wirkung. Ein weiterer wesentlicher Vorteil ist darin zu sehen, dass bei der Erzeugung des Plasmas keine schädlichen Verbrennungsrückstände entstehen. Das Verfahren ist deshalb besonders geeignet für Anwendungsfälle, in denen hohe Reinheits- und Sterilitätsanforderungen entstehen. Es lässt sich jedoch vorteilhaft auch in anderen Anwendungssituationen einsetzen, in denen Glas lokal aufgeschmolzen werden soll. In EP-B-0 761 415 und WO-A-01/43512 werden Plasmadüsen beschrieben, bei denen ein Strahl eines atmosphärischen Plasmas mit Hilfe einer Hochfrequenzentladung erzeugt wird. Diese Plasmadüsen erzeugen eine Plasmaflamme, die je nach Bedarf auch fächerförmig aufgeweitet sein kann und die hinsichtlich ihrer Form und Flammentemperatur mit der Flamme der bisher eingesetzten Gasbrenner vergleichbar ist. Diese Plasmadüsen sind daher für die Durchführung des erfindungsgemäßen Verfahrens besonders geeignet. Durch die Wahl der Düsenkonfiguration, des Elektrodenabstands, der Frequenz und der Spannung und des Luftdurchsatzes lässt sich die Flammenkonfiguration nach Bedarf optimieren. Da die Plasmadüsen auch in ihrer äußeren Gestalt und ihren Abmessungen den bisher eingesetzten Gasbrennern ähneln, können auch bestehende Anlagen zum Öffnen und Verschließen von Glasampullen problemlos auf das erfindungsgemäße Verfahren umgerüstet werden.

Eine Vorrichtung zur Durchführung des Verfahrens ist Gegenstand des Anspruchs 5.

Vorteilhafte Ausgestaltungen der Erfindung ergeben sich aus den Unteransprüchen.

Im Folgenden werden Ausführungsbeispiele der Erfindung anhand der Zeichnung näher erläutert.

Es zeigen:
- Fig. 1: einen Schnitt durch eine Plasmadüse zur Durchführung des erfindungsgemäßen Verfahrens;
- Fig. 2 und 3: schematische Darstellungen zur Erläuterung eines Verfahrens zum Öffnen von geschlossenen Glasampullen;
- Fig. 4: die wesentlichen Teile einer Vorrichtung zum Öffnen und/oder Verschließen von Glasampullen in der Draufsicht; und
- Fig. 5 bis: 7 verschiedene Schritte eines Verfahrens zum Schließen der Glasampullen.

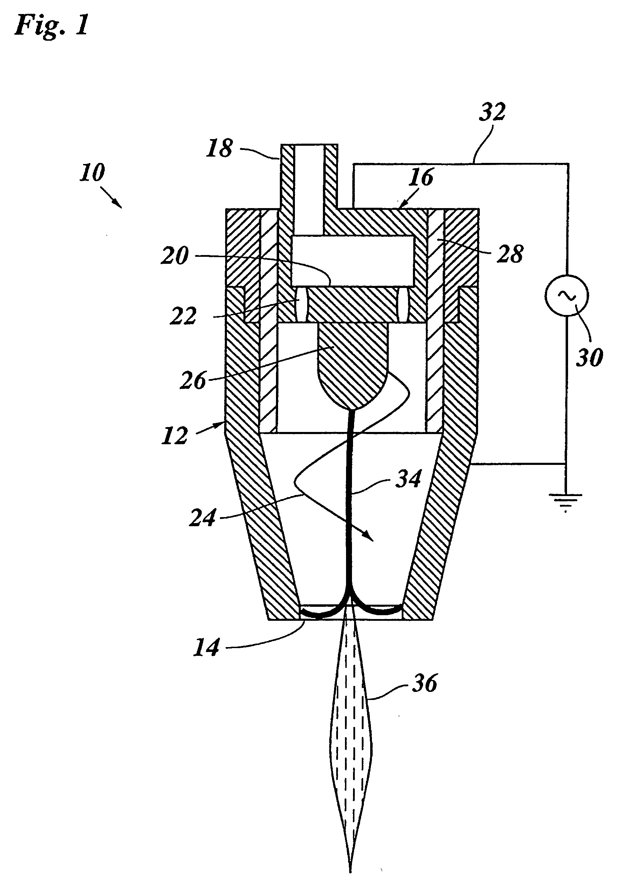

Eine in Figur 1 gezeigte Plasmadüse 10 weist ein Düsenrohr 12 aus Metall auf, das sich konisch zu einer Auslassöffnung 14 verjüngt. Am der Auslassöffnung 14 entgegen gesetzten Ende weist das Düsenrohr 12 eine Dralleinrichtung 16 mit einen Einlass 18 für ein Arbeitsgas auf, beispielsweise für Druckluft. Eine Zwischenwand 20 der Dralleinrichtung 16 weist einen Kranz von schräg in Umfangsrichtung angestellten Bohrungen 22 auf durch die das Arbeitsgas verdrallt wird. Der stromabwärtige, konisch verjüngte Teil des Düsenrohres wird deshalb von dem Arbeitsgas in der Form eines Wirbels 24 durchströmt, dessen Kern auf der Längsachse des Düsenrohres verläuft.

An der Unterseite der Zwischenwand 20 ist mittig eine Elektrode 26 angeordnet, die koaxial in den verjüngten Abschnitt des Düsenrohres hineinragt. Die Elektrode 26 ist elektrisch mit der Zwischenwand 20 und den übrigen Teilen der Dralleinrichtung 16 verbunden. Die Dralleinrichtung 16 ist durch ein Keramikrohr 28 elektrisch gegen das Düsenrohr 12 isoliert. Über die Dralleinrichtung 16 wird an die Elektrode 26 eine hochfrequente Wechselspannung angelegt, die von einem Hochfrequenztransformator 30 erzeugt wird. Die Primärspannung ist variabel regelbar und beträgt beispielsweise 300 bis 500 V. Die Sekundärspannung kann 1 bis 5 kV oder mehr betragen. Die Frequenz liegt beispielsweise in der Größenordnung von 1 bis 50 kHz und ist vorzugsweise ebenfalls regelbar. Die Dralleinrichtung 16 ist mit dem Hochfrequenztransformator 30 über ein flexibles Hochspannungskabel 32 verbunden. Der Einlass 18 ist über einen nicht gezeigten Schlauch mit einer Druckluftquelle mit variablem Durchsatz verbunden, die vorzugsweise mit dem Hochfrequenzgenerator 30 zu einer Versorgungseinheit kombiniert ist. Das Düsenrohr 12 ist geerdet.

Durch die angelegte Spannung wird eine Hochfrequenzentladung in der Form eines Lichtbogens 34 zwischen der Elektrode 26 und dem Düsenrohr 12 erzeugt. Aufgrund der drallförmigen Strömung des Arbeitsgases wird dieser Lichtbogen jedoch im Wirbelkern auf der Achse des Düsenrohres 12 kanalisiert, so dass er sich erst im Bereich der Auslassöffnung 14 zur Wand des Düsenrohres 12 verzweigt. Das Arbeitsgas, das im Bereich des Wirbelkerns und damit in unmittelbarer Nähe des Lichtbogens 34 mit hoher Strömungsgeschwindigkeit rotiert, kommt mit dem Lichtbogen in innige Berührung und wird dadurch zum Teil in den Plasmazustand überführt, so dass ein Strahl 36 eines atmosphärischen Plasmas, etwa in der Gestalt einer Kerzenflamme, aus der Auslassöffnung 14 der Plasmadüse 10 austritt. Die Temperatur des Plasmastrahls 36 liegt beispielsweise in der Größenordnung von 1600 bis 2500°C. Wenn der Plasmastrahl 36 auf die Oberfläche eines Glaskörpers, beispielsweise einer Glasampulle gerichtet wird, so kann das Glas wohldosiert erweicht und lokal aufgeschmolzen werden.

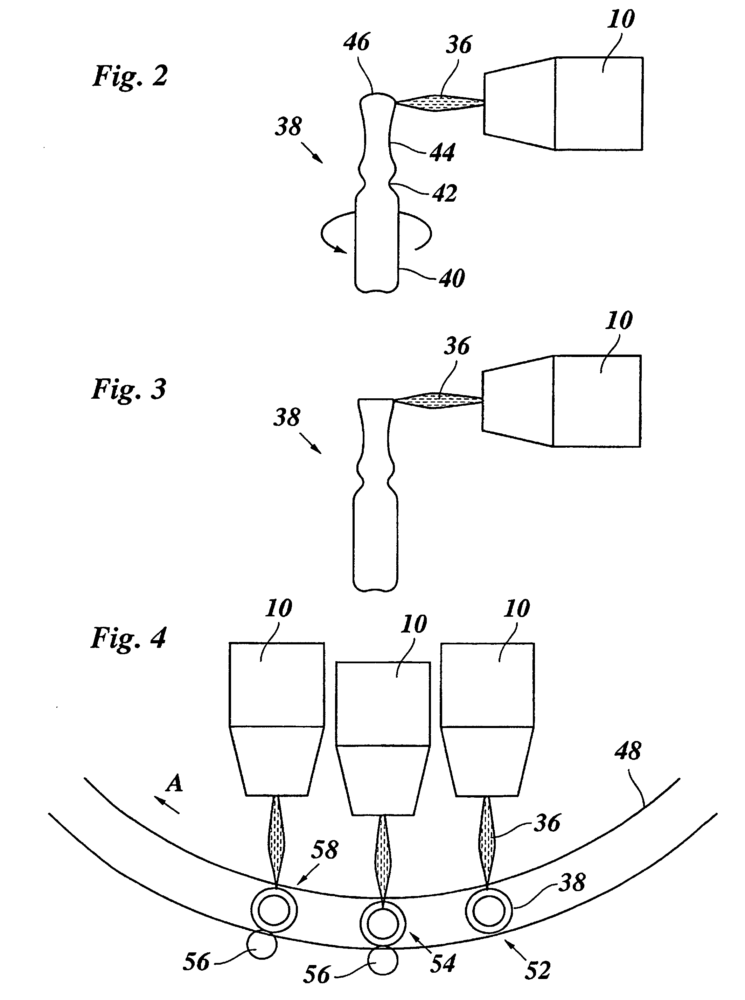

Figur 2 zeigt eine Glasampulle 38, die unter sterilen Reinraumbedingungen befüllt und dann wieder dicht verschlossen werden soll. Die Ampulle hat einen Kolben 40, der mit einer medizinischen Flüssigkeit befüllt werden soll, und weist am oberen Ende des Kolbens einen eingeschnürten Hals 42 auf, der später beim Öffnen der Ampulle abgebrochen oder abgesägt wird. An den Hals 42 schließt sich nach oben ein so genannter Ampullenspieß 44 an, der am oberen Ende durch eine aus dem Glas der Ampulle bestehende Kappe 46 verschlossen ist. Im Anlieferungszustand ist die Glasampulle 38 somit hermetisch geschlossen.

Damit die Ampulle befüllt werden kann, muss zunächst die Kappe 46 abgetrennt werden. Hierzu wird mit Hilfe des von der Plasmadüse 10 erzeugten Plasmastrahls 36 an einer Stelle des Umfangs der Kappe 46 ein Loch in die Glaswand gebrannt. Anschließend wird die Glasampulle 38 in Drehung versetzt, und mit Hilfe des Plasmastrahls 36 wird die Kappe 46 abgeschnitten. Das Ergebnis ist in Figur 3 gezeigt. Die nun am oberen Ende offene Glasampulle 38 kann dann zu einer nicht gezeigten Befüllstation weitertransportiert werden.

Figur 4 zeigt in einer schematischen Draufsicht einen Teil einer Vorrichtung zum Öffnen von Glasampullen 38 nach dem oben beschriebenen Verfahren. Die Glasampullen 38 werden der Reihe nach auf einem Karussell 48 transportiert, das schrittweise in der durch einen Pfeil A angegebenen Richtung gedreht wird. Am Umfang des Karussells 48, im gezeigten Beispiel am inneren Umfang, sind mehrere Plasmadüsen 10 ortsfest angeordnet. In der Zeichnung sind lediglich drei Plasmadüsen 10 gezeigt. Wahlweise kann jedoch eine größere Anzahl von Plasmadüsen verwendet werden.

Die auf dem Karussell 48 zugeführten Glasampullen 38 erreichen zunächst eine Station 52, in der mit der ersten Plasmadüse ein Loch in die Glaswand gebrannt wird, wie in Figur 2 gezeigt ist. Beim nächsten Halt des Karussells 48 wird die Glasampulle dann in der nächsten Station 54 beispielsweise mit Hilfe einer Reibrolle 56 in Drehung versetzt, so dass mit Hilfe des Plasmastrahls 36 ein in Umfangsrichtung verlaufender Schlitz in der Glaswand erzeugt wird. Im gezeigten Beispiel erstreckt sich der in der Station 54 erzeugte Schlitz über einen Umfangswinkel von 180°. Anschließend wird die Glasampulle zu einer Station 58 weitertransportiert, in der durch einen weiteren 180°-Schnitt die Kappe 46 ganz abgetrennt wird, wie in Figur 3 gezeigt ist. Je größer die Anzahl der eingesetzten Plasmadüsen 10 ist, desto kürzer können die Arbeitstakte in den einzelnen Stationen 52 bis 56 sein, und desto höher ist die Produktivität.

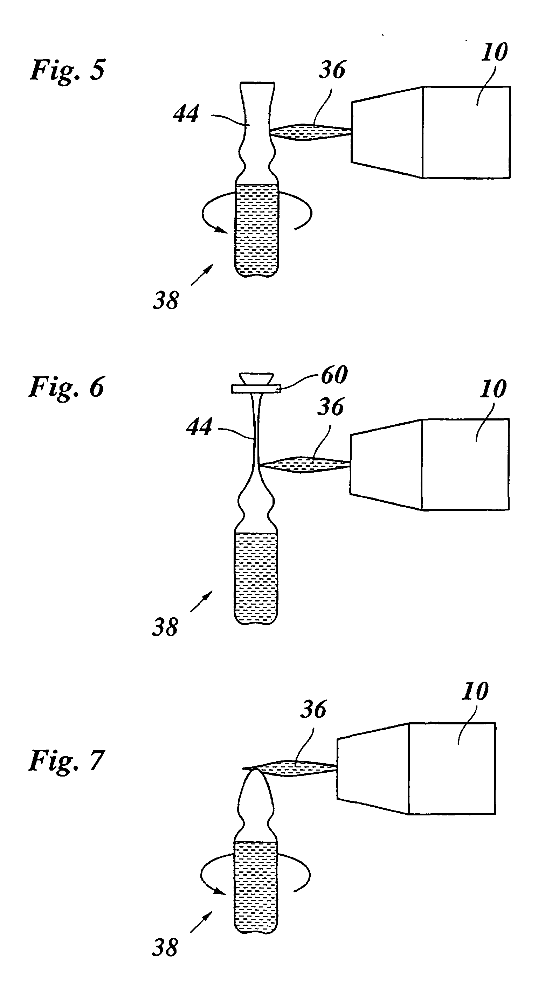

Anhand der Figuren 5 bis 7 soll nun ein Verfahren zum Verschließen der befüllten Glasampullen beschrieben werden.

Figur 5 zeigt eine frisch befüllte Glasampulle 38. Während die Glasampulle um ihre vertikale Mittelachse gedreht wird, wird der von der Plasmadüse 10 erzeugte Plasmastrahl 36 auf den Ampullenspieß 44 gerichtet, um die Glaswand im Bereich des Ampullenspießes aufzuweichen.

Anschließend wird der erweiterte obere Teil des Ampullenspießes 44 von einem Halter 60 erfasst und nach oben gezogen, so dass der Ampullenspieß 44 ausgezogen und eingeschnürt wird.

Wenn der Ampullenspieß ganz durchgetrennt ist, wird unter fortgesetzter Rotation der Glasampulle 38 das obere Ende der Glasampulle mit Hilfe des Plasmastrahls 36 zugeschmolzen.

Auch diese Vorgänge können mit einer Vorrichtung, die in ihrem Aufbau der in Figur 4 gezeigten Vorrichtung ähnelt, in mehreren Schritten und mit mehreren Plasmadüsen 10 ausgeführt werden.

Bei den hier beschriebenen Verfahren verbleibt der zur Erzeugung des Plasmastrahls 36 dienende Lichtbogen 34 weitgehend innerhalb der Plasmadüse 10. Wenn jedoch mit Glassorten gearbeitet wird, die eine sehr hohe Erweichungs- und Schmelztemperatur haben, beispielsweise beim Schließen von Quarzglaskolben für Halogenlampen, lässt sich eine höhere Plasmatemperatur dadurch erreichen, dass der Lichtbogen 34 aus der Plasmadüse ausgezogen wird. Dies kann etwa dadurch geschehen, dass auf der der Plasmadüse 10 entgegengesetzten Seite des Glaskolbens eine geerdete Gegenelektrode angeordnet wird, so dass der Lichtbogen 34 nicht auf die Wand des Düsenrohres 12 überspringt, sondern den Glaskolben umfließt und auf die Gegenelektrode überschlägt.

## Patentansprüche

1. Verfahren zum sterilen Öffnen oder Schließen von Glasampullen (38),
bei dem mit Hilfe eines Strahls (36) eines heißen
Mediums das Glas teilweise geschmolzen wird,
**dadurch gekennzeichnet,**
**dass** das Medium als atmosphärischer Plasmastrahl erzeugt wird und
**dass** der Plasmastrahl durch eine hochfrequente elektrische Entladung erzeugt wird.

2. Verfahren nach Anspruch 1 ,
bei dem zur Erzeugung des Plasmas Luft als Arbeitsgas benutzt wird.

3. Verfahren nach Anspruch 1 oder 2,
bei dem das Arbeitsgas in einer Plasmadüse (10) verdrallt wird.

4. Verfahren nach einem der Ansprüche 1 bis 3,
bei dem der Plasmastrahl (36) mit Hilfe eines Lichtbogens (34) erzeugt wird, der in einer Plasmadüse (10), die ein geerdetes, elektrisch leitendes Düsenrohr (12) aufweist, von einer Elektrode (26) auf das Düsenrohr (12) überschlägt.

5. Vorrichtung zum sterilen Öffnen oder Schließen von Glasampullen (38), die einen Strahl eines heißen Mediums verwendet um das Glas teilweise zu schmelzen.
mit einer Transporteinrichtung (48) für die Glasampullen (38),
**dadurch gekennzeichnet,**
**dass** mindestens eine Plasmadüse (10) vorgesehen ist, wobei die Plasmadüse (10) an einen Hochfrequenzgenerator (30) angeschlossen ist und
durch eine hochfrequente elektrische Entladung einen Strahl (36) eines atmosphärischen Plasmas, als besagtes heißes Medium, erzeugt und wobei die Plasmasdüse (10) so an der Transporteinrichtung (48) angeordnet ist, dass der Plasmastrahl (36) auf die auf der Transporteinrichtung (48) zugeführten Glasampullen (38) trifft.

6. Vorrichtung nach Anspruch 5,
**dadurch gekennzeichnet,**
**dass** die Plasmadüse (10) ein von einem Arbeitsgas durchströmtes Düsenrohr (12) und eine koaxial in dem Düsenrohr angeordnete Elektrode (26) aufweist.

7. Vorrichtung nach Anspruch 6,
**dadurch gekennzeichnet,**
**dass** in dem Düsenrohr (12) eine Dralleinrichtung (16) zum Verdrallen des Arbeitsgases angeordnet ist.

## Claims

1. Method for sterile opening or closure of glass ampoules (38), in which with the aid of a jet (36) of a hot medium the glass is partially melted,
**characterised in that**
the medium is generated as atmospheric plasma jet and
that the plasma jet is generated by a high-frequency electrical discharge.

2. Method according to claim 1, in which air is used as working gas.

3. Method according to claim 1 or 2, in which the working gas is swirled in a plasma nozzle (10).

4. Method according to one of claims 1 to 3, in which the plasma jet (36) is generated with the aid of an arc (34) which arcs over, in a plasma nozzle (10) which has an earthed electrically-conductive nozzle tube (12), from an electrode (26) to the nozzle tube (12).

5. Device for sterile opening or closure of glass ampoules (38), which uses a jet of a hot medium in order to partly melt the glass, with a transport device (48) for the glass ampoules (38),
**characterised in that**
at least one plasma nozzle (10) is provided, whereby the plasma nozzle (10) is connected to a high-frequency generator (30) and by a high-frequency electrical discharge generates a jet of an atmospheric plasma as said hot medium, and in which the plasma nozzle (10) is disposed on the transport device (48) in such a way that the plasma jet (36) strikes the glass ampoules (38) carried on the transport device (48).

6. Device according to claim 5,
**characterised in that**
the plasma nozzle (10) has a nozzle tube (12) through which a working gas flows and an electrode (26) disposed coaxially in the nozzle tube.

7. Device according to claim 6,
**characterised in that**
a swirling device (16) is disposed in the nozzle tube (12) to swirl the working gas.

## Revendications

1. Procédé pour l'ouverture ou la fermeture stérile d'ampoules en verre (38), dans lequel le verre est partiellement fondu à l'aide d'un jet (36) d'un milieu chaud,
**caractérisé en ce que**
le milieu est généré sous forme d'un jet de plasma atmosphérique et le jet de plasma est généré par une décharge électrique de haute fréquence.

2. Procédé selon la revendication 1, dans lequel on utilise l'air comme gaz de travail pour la génération du plasma.

3. Procédé selon la revendication 1 ou 2, dans lequel le gaz de travail est mis en rotation dans un pulvérisateur de plasma (10).

4. Procédé selon l'une quelconque des revendications 1 à 3, dans lequel on le jet de plasma (36) est généré à l'aide d'un arc électrique (34) qui jaillit dans un pulvérisateur de plasma (10), qui comporte un tube de pulvérisateur (12) électro-conducteur mis à la terre, à partir d'une électrode (26) sur le tube de pulvérisateur (12).

5. Dispositif pour l'ouverture ou la fermeture stérile d'ampoules en verre (38), qui utilise un jet d'un milieu chaud pour fondre partiellement le verre, avec un dispositif de transport (48) pour les ampoules en verre (38),
**caractérisé en ce que**
il est prévu au moins un pulvérisateur de plasma (10), le pulvérisateur de plasma (10) étant raccordé à un générateur à haute fréquence (30) et générant un jet (36) d'un plasma atmosphérique comme dit milieu chaud par une décharge électrique de haute fréquence et le pulvérisateur de plasma (10) étant raccordé de telle manière au dispositif de transport (48) que le jet de plasma (36) frappe les ampoules en verre (38) amenées sur le dispositif de transport (48).

6. Dispositif selon la revendication 5, **caractérisé en ce que** le pulvérisateur de plasma (10) comporte un tube de pulvérisateur (12) traversé par un gaz de travail et une électrode (26) disposée coaxialement dans le tube de pulvérisateur.

7. Dispositif selon la revendication 6, **caractérisé en ce qu'**un dispositif de rotation (16) est disposé dans le tube de pulvérisateur (12) pour mettre le gaz de travail en rotation.
